Europäisches Patentamt

(19) **European Patent Office**

**Office européen des brevets**

(11) Publication number: **0 009 020**
**B1**

(12) # EUROPEAN PATENT SPECIFICATION

(45) Date of publication of patent specification: **27.10.82**

(51) Int. Cl.³: **F 16 B 19/00**

(21) Application number: **79900018.7**

(22) Date of filing: **20.11.78**

(86) International application number:
**PCT/US78/00158**

(87) International publication number:
**WO 79/00335 14.06.79 Gazette 79/12**

(54) **FASTENER FOR SECURING TOGETHER TWO WORK PIECES.**

(30) Priority: **02.12.77 US 856823**

(43) Date of publication of application:
**19.03.80 Bulletin 80/6**

(45) Publication of the grant of the patent:
**27.10.82 Bulletin 82/43**

(84) Designated Contracting States:
**DE FR GB**

(56) References cited:
**CH - A - 514 076**
**DE - A - 2 541 105**
**GB - A - 647 180**
**GB - A - 751 439**
**US - A - 2 090 167**
**US - A - 2 438 499**
**US - A - 2 555 420**
**US - A - 3 160 053**
**US - A - 3 217 584**
**US - A - 3 618 443**
**US - A - 3 643 290**
**US - A - 3 803 670**

(73) Proprietor: **NCR Corporation**
**World Headquarters**
**Dayton Ohio 45479 (US)**

(72) Inventor: **SPERAW, Floyd, Gibson**
**Route 6 Ridgewood Acres**
**Cambridge, OH 43725 (US)**

(74) Representative: **Robinson, Robert George**
**International Patent Department NCR Limited 206**
**Marylebone Road**
**London NW1 6LY (GB)**

Courier Press, Leamington Spa, England.

A Fastener for Securing Together Two Work Pieces

Technical Field

The invention relates to a fastener for securing together two work pieces having substantially mutually aligned apertures, said fastener being of the kind including a fastener member having a body portion which is arranged to pass through said apertures and which is provided with first and second engaging means at opposite ends thereof. The two work pieces may be two flat metal parts.

More particularly, the invention relates to a fastener of the kind specified which is adapted to secure together two flat elements in a situation where there is no access to the area behind one of the elements; such a fastener is referred to as a "blind" fastener.

Background Art

A "blind" fastener of the kind specified is known from United States Patent No. 2,090,167, this fastener being stamped from a blank of metal such as soft iron and being folded along an axis substantially parallel to the spacing apart of the first and second engaging means of the fastener, so as to enable the fastener to be inserted through substantially aligned apertures of two workpieces to be secured together. After the fastener has been inserted through the apertures, it is flattened, as by means of pliers, in order to secure the work pieces between the first and second engaging means. The fastener must be sufficiently resistant to deformation for it to remain fixed in its flattened configuration after the securing operation has been completed. In view of their resistance to deformation, these known fasteners have the disadvantage that work pieces joined together by them are not readily separated without the aid of pliers or other tools. Also, such fasteners are not suited for reuse since repeated flattening and folding would cause them to be weakened or destroyed.

In United States Patent No. 2,555,420 there is disclosed a fastener having a retainer member for holding the fastener member in a work piece securing condition. The fastener member is in the form of a tube which is slit along its length and which is provided at one end with an outwardly projecting flange and at its other end with a plurality of deformable internally projecting protuberances. The retainer member is in the form of a core member having a substantially cylindrical stem which has a cross-sectional size somewhat greater than that of the bore of the tube. In order to fasten together two work pieces having substantially mutually aligned apertures, the tube is passed through the apertures until the flange at one end of the tube engages one of the work pieces, the other end of the tube projecting beyond the other work piece. The core member is then forced into the tube thereby expanding the tube and spreading the protuberances outwardly so as to cause them to engage with the adjacent work piece.

The known fastener referred to in the last mentioned United States Patent has the disadvantage that it is constructed to be fitted into apertures of predetermined size, thereby requiring different diameter fasteners to be produced to fit various sizes of apertures. A further disadvantage of this known fastener is that if it is desired to remove it from the work pieces for further use a special tool is required to effect the removal.

Disclosure of the Invention

It is an object of the present invention to provide a "blind" fastener which is reusable, which can be readily removed from the work pieces joined by it, and which can be used with apertures of various sizes.

According to the invention there is provided a fastener for securing together two work pieces having substantially aligned apertures, said fastener including a fastener member having a body portion arranged to pass through the apertures and provided with first and second engaging means at opposite ends thereof, the fastener member being foldable along an axis substantially parallel to the direction of spacing apart of the first and second engaging means so as to enable the fastener member to be inserted through the apertures when in a folded position but to be in a work piece securing condition when in an unfolded position, characterized by a retainer member for holding said fastener member in a work piece securing condition, said retainer member being provided with means for holding the fastener member in a selected one of a plurality of different unfolded positions.

It should be understood that a fastener in accordance with the present invention has the advantage that it can be arranged to fit in apertures of various sizes by unfolding the fastener member to an appropriate unfolded position, and that the fastener has the further advantage that it can be readily removed from the work pieces for further use simply by returning the fastener member to its fully folded position.

Further, the retainer member of a fastener in accordance with the present invention can be arranged to be of resilient construction and to be compressible between one of the work pieces and one of the engaging means; such an arrangement has the additional advantage that the work pieces secured together by the fastener are able to withstand vibrations.

Brief Description of Drawings

One embodiment of the invention will now be described by way of example with reference to the accompanying drawings, in which:

Fig. 1 is a perspective view of a fastener in accordance with the invention, the fastener being shown in a fully folded position prior to insertion within aligned apertures of two mating work pieces;

Fig. 2 is a side view of the fastener member of the fastener shown in Fig. 1, showing the fastener member in a fully unfolded position;

Fig. 3 is a sectional view taken on lines 3—3 of Fig. 2;

Fig. 4 is a plan view of the retainer member of the fastener;

Fig. 5 is a side view of the retainer member;

Fig. 6 is a sectional view of the fastener in a work piece securing condition, with the retainer member in a first position;

Fig. 7 is a sectional view similar to Fig. 6 with the retainer member in a second position;

Fig. 8 is a view taken on line 8—8 on Fig. 6 showing the fastener member in a fully open position when fitted in one size of aligned apertures; and

Fig. 9 is a view similar to Fig. 8 showing the fastener member in a partially open position when fitted in a smaller size of aligned · apertures.

Best Mode for Carrying Out the Invention

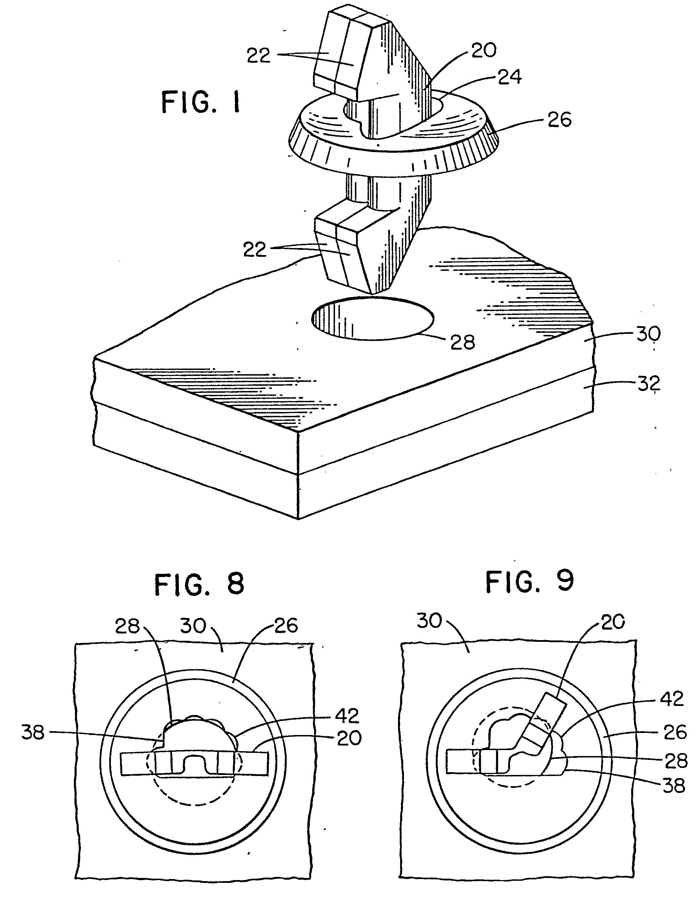

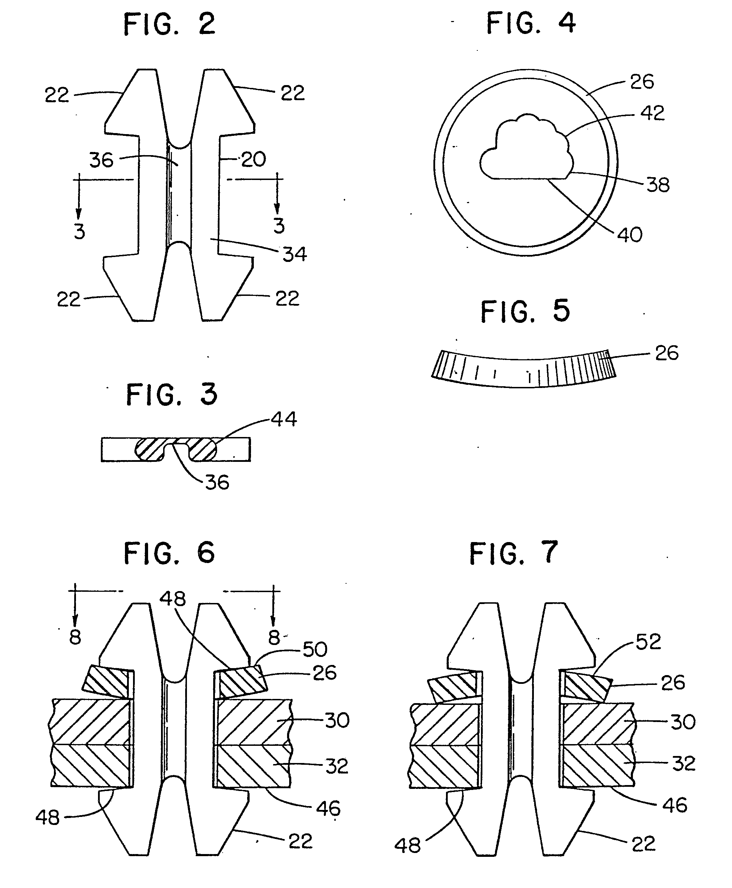

Referring to Fig. 1, there is shown therein a two piece hand-manipulated fastener shown in registry with aligned apertures 28 located in a pair of mating work pieces 30, 32 through which the fastener is to be inserted. The fastener includes a fastener member 20 having an elongated body portion 34 (Fig. 2) which is provided at each end with a pair of shoulder portions 22, the fastener member 20 being constructed so as to be foldable along its long axis, that is to say along an axis parallel to the direction of spacing apart of the two pairs of shoulder portions 22. The fastener member 20 is positioned within an aperture 24 of an associated retainer ring 26 which is slidable along the body portion 34 so as to be selectively positioned adjacent the pair of shoulder portions 22 at either end of the fastener member 20.

Referring now to Fig. 2, there is shown a side view of the fastener member 20 which is preferably formed or molded in a configuration in which the elongated body portion 34 includes an axially extending reduced middle portion 36 (Fig. 3) facilitating the folding of the fastener member 20 along said middle portion. Formed at both ends of the body portion 34 are the shoulder portions 22 which function to secure together the mating work pieces 30, 32 (Fig. 1) upon the insertion of the fastener member through the apertures 28. The present embodiment of the fastener may be molded of a linear polypropylene plastic although it is obvious that other types of materials may be used which will allow repeated folding of the fastener member 20 along the reduced portion 36 without weakening the holding capability of the fastener.

Associated with the fastener member 20 is the retainer ring 26 (Fig. 1 and 4) which may be formed of an elastic material such as styrene, or of thin sheet steel, the ring 26 being formed with concave and convex faces spaced apart along the axis of the fastener member 20 as shown in Figs. 5—7. The aperture 24 of the ring 26 has a straight edge 40 which substantially conforms to one side of the body portion 34 when in a fully open position, and a curved portion 38 in which are formed a plurality of arcuate detent or locking surfaces 42 (Fig. 4, 8 and 9), each of which conforms to the configuration of the opposed edges 44 (Fig. 3) of the body portion 34. As will be described more fully hereinafter, the detent surfaces 42 will lock the fastener member 20 in a plurality of unfolded positions (Fig. 8 and 9) to accommodate variation in the size of the apertures 28 (Fig. 1) located in the work pieces 30, 32, in which the fastener member 20 may be inserted.

Referring now to Fig. 6—9 inclusive, there is shown the fastener member 20 and the retainer ring 26 in various mounting configurations illustrating the advantages of the present embodiment. Prior to insertion, the fastener member 20 is folded over on itself along the reduced portion 36 to assume the configuration shown in Fig. 1. After insertion, the fastener member 20 is unfolded allowing the pair of shoulder portions 22 located at one end to engage one side of the retainer ring 26 (Fig. 6) while the pair of shoulder portions 22 at the opposite end engages the underside edge 46 of the work piece 32. The retainer ring 26 may be mounted adjacent the top work piece 30 in either a concave (Fig. 6) or a convex (Fig. 7) configuration allowing the fastener member 20 to fasten various thicknesses of work pieces together. As shown in Fig. 6, the underside edge 48 of each of the shoulder portions 22 is beveled so as to conform to the concave face 50 of the retainer ring 26 thereby providing maximum contact between the shoulder portions 22 and the retainer ring 26 to ensure a more positive clamping engagement between the fastener member 20 and the work pieces 30, 32.

It will be seen from Fig. 7 that the distance between the point of engagement of the underside edge 48 of the relevant shoulder portions 22 and the top edge 52 of the work piece 30 when the ring is in an uncompressed convex position is greater than a similar distance shown in Fig. 6 when the ring 26 is in an uncompressed concave position. Since the fastener member 20 has the same configuration at both its ends, moving the ring to either end of the fastener member 20 easily positions the ring in either the convex or concave configuration. Thus, it will be appreciated that the fastener can be arranged to accommodate a greater or a lesser combined thickness of the work pieces 30, 32 simply by sliding the ring 26 from one end of the fastener member 20 to the other. In either case, the position of the ring 26 is selected so as to be slightly compressed by the engagement of the ring 26 with one of the pairs of shoulder portions 22 upon the unfolding of the fastener member 20 after insertion through the work pieces 30, 32, thereby enabling the work pieces to withstand vibrations.

As shown in Fig. 8, the unfolding of the fastener member 20 after insertion through the aligned apertures 28 in the work pieces 30, 32 may assume a fully open, slightly over-center position (i.e. in which the fastener member is unfolded through slightly more than 180 degrees) with the edges 44 of the body portion 34 being located in opposite detent surfaces 42 of the aperture 24. This over-center position, produced by the presence of the reduced center portion 36 in the body portion 34, provides a more positive locking condition than when the fastener member is in a horizontal position (with reference to Fig. 8) when in a fully open position. The locking detent surfaces 42 which are dimensioned to provide a detent action for the unfolding movement of the fastener member 20 function to lock the fastener member 20 in its unfolded position and to prevent any inadvertent folding of the fastener member. It should be understood that at least one or other of the fastener member 20 and the ring 26 is of resilient construction to permit an edge 44 of the body portion 34 to engage with a selected detent surface 42 with a snap-in action. Where the diameter of the apertures 28 in the work pieces 30, 32 is less than the width of the body portion 34 when located in the fully open position shown in Fig. 8, one edge 44 of the body portion 34 may be positioned within one of the offset detent surfaces 42 (Fig. 9), the particular detent surface 42 being selected to allow the fastener member 20 to be accommodated within the diameter of the apertures 28. To remove the fastener member 20 from the apertures 28, the fastener member is simply rotated to its fully folded position (Fig. 1) and then withdrawn from the apertures 28. It will be seen from this construction that by folding the fastener member 20 on itself, the fastener member can be easily inserted through the aperture 28 in the work pieces 30, 32 and then unfolded to a work piece securing condition.

It will be apparent from the foregoing description that the present invention contemplates a fastener member of simple design which may be readily produced by the practice of conventional plastic molding methods which lends itself to a low cost construction of the fastener.

Industrial Applicability

The work pieces 30 and 32 referred to above may take the form of flat metal parts. In one particular application of the present invention the work piece 30 is a flange portion of a printer mechanism, and the work piece 32 is a panel member of a data terminal device on which the printer mechanism is mounted.

Claims

1. A fastener for securing together two work pieces having substantially aligned apertures, said fastener including a fastener member (20) having a body portion (34) arranged to pass through the apertures and provided with first and second engaging means (22) at opposite ends thereof, the fastener member being foldable along an axis substantially parallel to the direction of spacing apart of the first and second engaging means so as to enable the fastener member to be inserted through the apertures when in a folded position but to be in a work piece securing condition when in an unfolded position, characterized by a retainer member (26) for holding said fastener member (20) in a work piece securing condition, said retainer member (26) being provided with means (42) for holding the fastener member in a selected one of a plurality of different unfolded positions.

2. A fastener according to Claim 1, characterized in that said retainer member (26) is of resilient construction and is arranged to be compressible between one of the work pieces (30, 32) and one of said engaging means (22).

3. A fastener according to Claim 2, characterized in that said retainer member is provided with an aperture (24) through which passes said body portion (34), and is provided with concave and convex faces (50, 52) which are spaced apart along said axis and one of which is arranged to engage with one of the work pieces (30, 32) and the other of which is arranged to engage with one of said engaging means (22).

4. A fastener according to Claim 3, characterized in that said retainer member (26) is slidable along said body portion (34) so as to be positionable adjacent a selected one of the ends of said body portion, the configuration of said engaging means (22) being such that, with said retainer member (26) in an uncompressed condition, a greater combined thickness of work pieces can be accommodated between said retainer member (26) and one of said engaging means (22) when said retainer member (26) is positioned adjacent one end of said body portion (34) than when said retainer member is positioned adjacent the other end of said body portion.

5. A fastener according to Claim 1, characterized in that said retainer member (26) is provided with a plurality of locking surfaces (42) adapted to engage with said fastener member (20) for the purpose of holding said fastener member in a selected unfolded position.

6. A fastener according to Claim 5, characterized in that at least one or other of said fastener member (20) and said retainer member (26) is of resilient construction so as to permit snap-in engagement of said fastener member with a selected locking surface (42).

7. A fastener according to Claim 6, characterized in that said retainer member has an aperture (24) through which passes said body portion (34), the edge of this aperture having said locking surfaces (42) formed therein.

8. A fastener according to Claim 7, characterized in that opposed edges (44) of said body portion (34) are adapted to respectively engage with a selected two of said locking surfaces (42) for the purpose of holding said fastener member (20) in a selected unfolded position.

9. A fastener according to Claim 8, characterized in that that portion of said body portion (34) along which said axis passes is of reduced thickness.

10. A fastener according to Claim 9, characterized in that said locking surfaces (42) are so arranged that said fastener member (20) is unfolded through more than 180 degrees when in a fully open position.

11. A fastener according to Claim 7, characterized in that the edge of said aperture (24) includes a straight portion and a curved portion (38) in which said locking surfaces (42) are formed.

12. A fastener according to any one of the preceding claims, characterized in that each of said engaging means is formed by a pair of shoulder portions (22), the shoulder portions of each pair being so arranged as to be positioned adjacent each other when said fastener member (20) is in a fully folded position.

**Revendications**

1. Attache destinée a fixer deux pièces présentant des ouvertures pratiquement mutuellement alignées, ladite attache comportant un élément de fixation (20) comprenant un corps (34) disposé pour traverser lesdites ouvertures (28) et qui comporte, à ses extrêmités opposées, un premier et un second dispositifs de blocage (22), ledit élément de fixation (20) étant capable de se plier selon un axe passant dans une direction pratiquement parallèle à la direction d'écartement desdits premier et second dispositifs de blocage (22) pour permettre d'insérer ledit élément de fixation à travers lesdites ouvertures (28) lorsqu'il est dans une position totalement pliée mais de lui faire occuper une position de maintien de pièce lorsqu'il est dans une position dépliée, caractérisée par un élément de retenue (26) qui comporte des dispositifs (42) destinés a maintenir ledit élément de fixation dans une position sélectionnée parmi différentes positions dépliées.

2. Attache selon la revendication 1, caractérisée en ce que ledit élément de retenue (26) est de construction souple et disposé pour pouvoir être comprimé entre une des pièces (30, 32) et un desdits dispositifs de blocage (22).

3. Attache selon la revendication 2, caractérisée en ce que ledit élément de retenue comporte une ouverture (24) à travers laquelle passe ledit corps (34) et comporte des faces concave et convexe (50, 52) qui sont écartées le long dudit axe et dont l'une est disposée pour entrer en contact avec une des pièces (30, 32) et l'autre est disposée pour entrer en contact avec l'un desdits dispositifs de blocage (22).

4. Attache selon la revendication 3, caractérisée en ce que ledit élément de retenue (26) peut coulisser le long dudit corps (34) pour pouvoir être positionné près d'une des extrémités dudit corps, la configuration dudit dispositif de blocage (22) étant telle que, lorsque l'élément de retenue (26) est dans l'état non comprimé, l'épaisseur combinée de pièces admise entre ledit élément de retenue (26) et un desdits dispositifs de blocage (22) lorsque ledit élément de retenue (26) est positionné à côté de l'autre extrêmité dudit corps (34) est supérieure à ce qu'elle est lorsque ledit élément de retenue est positionné à côté de l'autre extrêmité dudit corps.

5. Attache selon la revendication 1, caractérisée en ce que ledit élément de retenue (26) comporte plusieurs surgaces de verrouillage (42) adaptées pour s'associer audit élément de fixation (20) pour maintenir ledit élément de fixation dans une position dépliée choisie.

6. Attache selon la revendication 5, caractérisée en ce que au moins ledit élément de fixation (20) ou ledit élément de retenue (26) est de construction souple pour permettre la solidarisation instantanée dudit élément de fixation avec une surface de verrouillage sélectionée (42).

7. Attache selon la revendication 6, caractérisée en ce que ledit élément de retenue comporte une ouverture (24) à travers laquelle passe ledit corps (34), le bord de cette ouverture comportant lesdites surfaces de verrouillage (42) intégrées.

8. Attache selon la revendication 7, caractérisée en ce que les bords opposés (44) dudit corps (34) sont adaptés pour s'associer respectivement à deux surfaces sélectionées parmi lesdites surfaces (42) pour maintenir ledit élément de fixation (20) dans une position dépliée sélectionnée.

9. Attache selon la revendication 8, caractérisée en ce que la partie du corps (34) le long de laquelle passe ledit axe est d'épaisseur réduite.

10. Attache selon la revendication 9, caractérisée en ce que lesdites surfaces de verrouillage (42) sont disposées de telle sorte que ledit élément de fixation (20) est déplié sur plus de 180 degrés lorsqu'il est dans une position totalement ouverte.

11. Attache selon la revendication 7, caractérisée en ce que le bord de ladite ouverture (24) comprend une partie droite et une partie courbe (38) dans laquelle sont constituées lesdites surfaces de verrouillage (42).

12. Attache selon l'une quelconque des revendications précédentes, caractérisée en ce que chacun desdits dispositifs de blocage est constitué par une paire d'épaulements (22), les épaulements de chaque paire étant disposés de telle sorte qu'ils sont positionnés l'un à côté de l'autre lorsque ledit élément de fixation (20) se trouve dans sa position totalement pliée.

## Patentansprüche

1. Befestigungselement zum Befestigen zweier Werkstücke, welche annähernd miteinander ausgerichtete Öffnungen besitzen, mit einem Befestigungsglied (20) mit einen Körper (34), welcher derart angeordnet ist, dass er durch die genannten Öffnungen (28) hindurchgesteckt werden kann und der mit ersten und zweiten Haltemitteln (22) an seinen entgegengesetzten Enden versehen ist, wobei das Befestigungsglied (20) längs einer Achse faltbar ist, die annähernd parallel zu der Richtung verläuft, in der die ersten und zweiten Haltemittel (22) voneinander entfernt werden können, so dass das Befestigungsglied durch die genannten Öffnungen (28) in seiner gänzlich gefalteten Position eingesetzt werden kann, während es in der entfalteten Position sich in einer das Werkstück sichernden Stellung befindet, gekennzeichnet durch ein Halteglied (26) das mit Mitteln (42) zum Halten des Befestigungsgliedes in einer gewählten von einer Vielzahl unterschiedlicher entfalteter Positionen versehen ist.

2. Befestigungselement nach Anspruch 1, dadurch gekennzeichnet, dass das Halteglied (26) von nachgiebigem Aufbau und derart ausgebildet ist, dass es zwischen eines der Wertstücke (30, 32) und eines der Haltemittel (22) einpressbar ist.

3. Besfestigungselement nach Anspruch 2, dadurch gekennzeichnet, dass das Halteglied mit einer Öffnung (24) versehen ist, durch welche der Kernteil (34) verläuft und dass es mit konkaven und konvexen Flächen (50, 52) versehen ist, die in Abstant voneinander längs der genannten Achse angeordnet sind und von denen eine dazu dient, mit einem der Werkstücke (30, 32) in Eingriff zu gehen und die andere mit einem der genannten Haltemittel (22).

4. Befestigungselement nach Anspruch 3, dadurch gekennzeichnet, dass das Halteglied (26) längs des genannten Körperteils (34) verschiebbar ist, so dass es nahe eines ausgewählten der Enden des Körperteils positionierbar ist, wobei die Ausbildung der Haltemittel (22) derart ist, dass, wenn sich das genannte Halteglied (26) in einer nicht zusammengepressten Stellung befindet, eine grössere kombinierte Dicke der Werkstücke zwischen dem genannten Halteglied (26) und einem der Haltemittel (22) untergebracht sein kann, wenn das genannte Halteglied (26) in der Nähe eines Endes des Körperteiles (34) angeordnet ist als wenn das Halteglied in der Nähe des anderen Endes des genannten Körperteils positioniert ist.

5. Befestigungselement nach Anspruch 1, dadurch gekennzeichnet, dass das genannte Halteglied (26) mit einer Mehrzahl von Sperrflächen (42) versehen ist, welche mit dem genannten Befestigungsglied (20) in Eingriff gehen können, um das Halteglied in einer gewählten entfalteten Position zu halten.

6. Befestigungselement nach Anspruch 5, dadurch gekennzeichnet, dass zumindest das genannte Befestigungsglied (20) und/oder das Halteglied (26) von nachgiebigem Aufbau ist, so dass es ein Einschnappen des genannten Befestigungsgliedes in eine ausgewählte Sperrfläche (42) erlaubt.

7. Befestigungselement nach Anspruch 6, dadurch gekennzeichnet, dass das genannte Halteglied eine Öffnung (24) besitzt, durch welche der genannte Körperteil (34) verläuft, wobei die Kante der Öffnung mit den genannten Sperrflächen (42) ausgebildet ist.

8. Befestigungselement nach Anspruch 7, dadurch gekennzeichnet, das gegenüberliegende Kanten (44) des Körperteiles (34) dazu geignet sind, entsprechend mit ausgewählten zwei der genannten Sperrflächen (42) in Eingriff zu gehen, um das genannte Befestigungsglied (20) in einer gewählten entfalteten Position zu halten.

9. Befestigungselement nach Anspruch 8, dadurch gekennzeichnet, dass derjenige Teil des Körperteils (34), längs dem die genannte Achse verläuft, eine reduzierte Dicke aufweist.

10. Befestigungselement nach Anspruch 9, dadurch gekennzeichnet, dass die genannten Sperrflächen (42) derart angeordnet sind, dass das genannte Befestigungsglied (20) über mehr als 180 Grad entfaltet ist, wenn es sich in einer vollständig geöffneten Position befindet.

11. Befestigungselement nach Anspruch 7, dadurch gekennzeichnet, dass die Kante der genannten Öffnung (24) einen geraden Teil und einen gekrümmten Teil (38) aufweist, in dem die genannten Sperrflächen (42) ausgebildet sind.

12. Befestigungselement nach einem der vorhergehenden Ansprüche, dadurch gekennzeichnet, dass jedes der genannten Haltemittel durch zwei Schulterteile (22) gebildet wird, wobei die Schulterteile jedes Paares derart angeordnet sind, dass sie benachbart zueinander positioniert sind, wenn das genannte Befestigungsglied (20) in seiner voll entfalteten Position ist.

**0 009 020**

FIG. 1

FIG. 8

FIG. 9

1

FIG. 2

FIG. 4

FIG. 3

FIG. 5

FIG. 6

FIG. 7